Europäisches Patentamt

(19) European Patent Office

Office européen des brevets

(11) Publication number: **0 181 424**
**A1**

(12) **EUROPEAN PATENT APPLICATION**

(21) Application number: **84830309.5**

(22) Date of filing: **15.11.84**

(51) Int. Cl.⁴: **A 21 B 5/00**

(43) Date of publication of application:
**21.05.86 Bulletin 86/21**

(84) Designated Contracting States:
**AT BE CH DE FR GB LI LU NL SE**

(71) Applicant: **Galli, Carlo**
**Via Capua 74**
**I-00177 Roma(IT)**

(72) Inventor: **Galli, Carlo**
**Via Capua 74**
**I-00177 Roma(IT)**

(74) Representative: **Fiammenghi-Domenighetti,**
**Delfina et al,**
**Racheli-Fiammenghi-Fiammenghi Via Quattro Fontane**
**31**
**I-00184 Roma(IT)**

(54) **A device for the production of ice-cream cones and the product obtained.**

(57) A device operatively connected to a machine for the production of cone-shaped wafers and comprising a chain or belt conveyer –either means, that is chain or belt, moving cone-shaped receptacles, which can be of an insert type–, a cream batcher and a presser for the wafers. The product obtained is an ice-cream cone constituted of a pair of equally tapered cone-shaped wafers and of a layer of cream interposed between the two wafers, one being fitted into the other.

FIG 1

FIG.5

A DEVICE FOR THE PRODUCTION OF ICE-CREAM CONES AND THE
PRODUCT OBTAINED

The present invention relates to a device for the production of ice-cream cones and the product obtained.

It is known that the usual ice-cream cone is a cone-shaped wafer produced by machines which form and cook measured quantities of a paste generally composed of water, flour and sugar. When the cone-shaped wafers leave the machine, they are ready for packaging.

It is noted that the ice-cream cones do not have only the function of being containers for the ice-cream, but also provide an alternative sensation to the cold substance, which, introduced continuosly into the mouth, greatly reduces the sensibility of the palate and therefore diminishes the possibility of enjoing the diverse tastes of the ice-cream.

Accordingly, the wafer, due to its consistency and shape, has a particular importance, above all for ice-cream which is to be licked. In such a case, the wafer has also the function of container, and this function will be as valid as is the wafer's ability to prevent the dripping of the ice-cream, which melts and runs down the borders of the cone.

With the present invention, the author wants to provide a tasteful, or more tasteful, ice-cream-containing element which also impedes, as much as possible, the dripping. The process involves the combining of two, equally tapered cone-shaped wafers in such a way that one wafer can be coaxially fitted into the other, leaving between the two wafers a hollow space which can be filled with chocolates - or vanilla-flavoured cream or other creamy products.

Because it is necessary that the cone-shaped wafers, one having been fitted into the other, form between them a hollow space which has a radially constant dimension in corrispondence with all possible cross-sections of the cone, there are provided at least three projections which are directed along the generatrix of the cone and which have the function of permitting the coaxial alignment of the two cone-shaped wafers and of creating a hollow space of the desired constant dimension, dependent upon the height of the projections.

For the production of the ice-cream cone described above, there is provided a device operatively connected to a machine for the production of cone-shaped wafers and comprising a conveyer for the external cone-shaped wafers, a cream batcher and a presser for the internal cone-shaped wafers.

The characteristics of the present invention will be more evident from the following description taken in connection with the attached drawings, in which:

Figure 1 is a diagrammatic side view of a device for the production of ice-cream cones according to the preset invention;

Figure 2 is a top plan view illustrating very schematically the device of Figure 1, which is connected to a machine for the production of cone-shaped wafers;

Figure 3 is a side view, partially in longitudinal axial section, of an ice-cream cone according to a first embodiment of the invention;

Figure 4 is a cross-section taken along the line A-A of Figure 3; and

Figure 5 is a longitudinal section of an ice-cream cone according to a second embodiment of the invention.

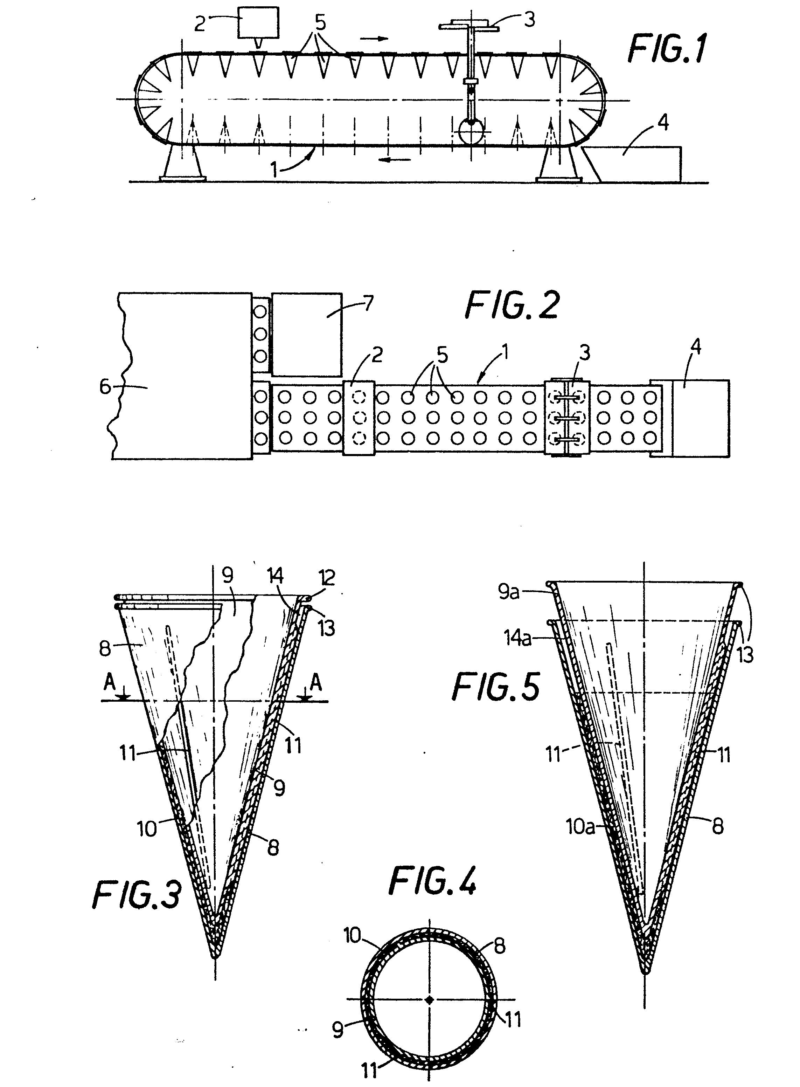

With reference, first of all, to Figures 1 and 2, a chain or belt conveyer is designated by numeral reference 1; numeral 2 indicates a cream batcher; 3 indicates a presser for cone-shaped wafers; a container, which receives the finished product, is indicated as 4. Receptacles 5, tapered in the same dimension as the cone-shaped wafers, are inserted in the conveying means, i.e. belt or chain of the conveyer 1. The cone shaped receptacles 5, made, for example, of stainless steel, are aligned in three rows, as shown in Figure 2; they advance longitudinally together with the conveyer belt or chain in the direction indicated by the arrows. On the lefthand side of Figure 1, the wafers are fitted automatically, or by an operator, and they pass under the nozzles of the cream batcher 2, which dispenses the desired quantity of cream; in the interval between the cream batcher 2 and the wafer presser 3, a second, empty wafer, i.e. the internal one, provided with projections on its external surface, is fitted into the wafer containing the cream.

The wafer presser 3 is an eccentric mechanism, which is connected to and moved by the conveyer 1 through suitable means. The wafer presser is provided with at least two pushing bars, which are fixed at different heights on the presser head in the direction of the movement of the belt. Therefore, the wafer presser 3 is able to gradually lower, by means of the contact surfaces of the pushing bars, two in number in Figures 1 and 2, two transversal rows of cone-shaped wafers. Immediately after, the wafers can be removed from the receptacles or can simply be allowed to fall into the collecting container 4.

In Figure 2, the device described above is operatively connected to a machine 6 which produces the cone-shaped wafers.

For the purposes which will be explained hereinafter, it is useful that the machine produces cone-shaped wafers of two different sizes, that is to say having slightly diverse conical bases, but mantaining the same taper. At the exit from the machine 6, external wafers, having a slightly larger dimension and designed to be fed into the conveyer, and smaller wafers, collected in a container 7 and designed to be fitted by the operator into the external wafers, are at disposition at the same time.

In Figures 3 to 5, external wafers are indicated as 8, internal wafers as 9, 9a, and the cream layer interposed between the wafers 8 and 9, or 9a, is designed by numeral 10 or 10a. The wafers are conical and have the same taper. The internal wafer 9 has on its external surface at least three projections 11 which are directed along the generatrix of the cone.

In the first embodiment (Figures 3 and 4), the internal wafers 9 has at its base, which has an area less than that of the external wafer 8, a circumferential edge 12 which protrudes radially and outwardly. Therefore, when the wafer 9 is fully fitted into the wafer 8, the circumferential edge 12 rests on the rim 13 of the wafer 8. The straight projections 11 insure that a constant space 14, designed to be filled with cream up to a set level, is maintained between the two cone-shaped wafers.

In the second embodiment (Figure 5), the cone-shaped wafers 8, 9a have preferably the same base edges 13, and can have also the same dimensions. The cream filling 10a, which reaches up to a level less than that of the first embodiment, leaves a hollow space 14a, and the straight projections 11 allow the internal wafer 9a to remain raised in relation to the external wafer 8.

The first embodiment is provided in order to obtain a product having a more various and composite taste than that of the conventional product, while the second embodiment, because the wafer bases have different levels of elevation, and because the cream reaches a level lower than the first embodiment, is provided in order to favour retention of ice-cream eventually dripping from the edge of the internal wafer.

CLAIMS

1. A device for the production of ice-cream cones, characterized in that it comprises a chain or belt conveyer (1), along the conveying means of which, that is chain or belt, conical receptacles (5) are inserted, each being apt to receive an external cone-shaped wafer for an ice-cream cone, a cream batcher (2) and a presser (3) for the cone-shaped wafers positioned in sequence in the direction of the movement of the conveying means, in order, respectively, to pour the correct quantity of cream and gradually to push coaxially an internal cone-shaped wafer into each external cone-shaped wafer.

2. The device as claimed in claim 1, in which the presser (3) for the wafer is designed to be moved upwardly and downwardly.

3. An ice-cream cone, characterized in that it is constituted of a pair of equally tapered cone-shaped wafers, and of a cream layer, which is interposed up to a set height between the cone-shaped wafers, which are fitted coaxially one into the other, the internal cone-shaped wafer having on its external surface at least three projections (11), which are directed along the generatrix of the cone.

4. An ice-cream cone as claimed in claim 3, in which the internal cone-shaped wafer (9) has an area of the free base less than that of the external cone-shaped wafer (8) and is provided with a radial edge (12), which covers the rim (13) of the external cone-shaped wafer (8), when the radial edge (12) is brought into contact with the rim (13) during the fitting of the two cone-shaped wafers.

5. An ice-cream cone as claimed in claim 3, in which the internal cone-shaped wafer (9a) and the external cone-shaped wafer (8) are the same and their bases are not in contact.

0181424

FIG.1

FIG.2

FIG.3

FIG.4

FIG.5

**European Patent Office**

**EUROPEAN SEARCH REPORT**

0181424

Application number

EP 84 83 0309

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | GB-A- 19 017 (O. IMRAY)(A.D. 1909)<br><br>----- | | A 21 B    5/00<br><br><br><br>**TECHNICAL FIELDS SEARCHED (Int Cl 4)**<br><br>A 21 C<br>A 21 B |

The present search report has been drawn up for all claims

| Place of search | Date of completion of the search | Examiner |
|---|---|---|
| THE HAGUE | 24-01-1986 | FRANKS N.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82